# EUROPÄISCHE PATENTSCHRIFT

(11) **EP 2 781 405 B1**
(45) Veröffentlichungstag und Bekanntmachung des Hinweises auf die Patenterteilung: **23.01.2019**
(21) Anmeldenummer: 13005472.9
(22) Anmeldetag: 22.11.2013
(51) Int. Cl.: B60P 3/39, B62D 33/06

(54) **Lagerung für eine Liege in einem Fahrzeug und Verfahren zur Einstellung der Liege**
Support for a bed in a vehicle and method for adjusting the bed
Cabine couchette pour véhicule et procédé de réglage de la couchette

(30) Priorität: 21.03.2013 DE 102013004897
(43) Veröffentlichungstag der Anmeldung: 24.09.2014
(73) Patentinhaber: MAN Truck & Bus AG, 80995 München (DE)
(72) Erfinder: König, Ilja, 80939 München (DE); Winkler, Tino, 85748 Garching (DE)
(74) Vertreter: Beier, Ralph

(56) Entgegenhaltungen:
- WO-A2-2010/132961
- DE-A1-102006 060 616
- DE-U1-202011 106 871

## Beschreibung

Die Erfindung betrifft eine Lagerung für eine Liege in einem Fahrzeug, insbesondere in einer Schlafkabine eines Lastkraftwagens. Weiterhin betrifft die Erfindung ein Verfahren zur Einstellung einer solchen Liege.

Moderne Lastkraftwagen (LKW) für den Fernverkehr weisen üblicherweise eine Schlafkabine auf, in der sich der Fahrer während der gesetzlich vorgeschriebenen Ruhezeiten auf einer Liege ausruhen kann, wobei die Liege üblicherweise quer zur Fahrtrichtung angeordnet ist. Problematisch hierbei ist, dass Parkplätze für Lastkraftwagen oftmals nicht exakt waagerecht ausgerichtet sind, so dass die Liege in der Schlafkabine des Lastkraftwagens ebenfalls entsprechend geneigt ist. Eine derart geneigte Liegefläche erschwert jedoch ein entspanntes Schlafen und verhindert dadurch eine optimale Wiederherstellung der Fahrtüchtigkeit in den gesetzlich vorgeschriebenen Ruhezeiten.

Zum Stand der Technik ist auch hinzuweisen auf DE 20 2011 106871 U1 und WO 2010/132961 A2.

Schließlich ist aus DE 10 2006 060616 A1 eine Lagerung für eine Liege in einem Fahrzeug gemäß dem Oberbegriff von Anspruch 1 bekannt. Die Einstellung der Neigung der Liege ist hierbei jedoch noch nicht optimal.

Der Erfindung liegt deshalb die Aufgabe zugrunde, eine entsprechend verbesserte Lagerung für eine Liege zu schaffen.

Diese Aufgabe wird durch eine erfindungsgemäße Lagerung für eine Liege und durch ein entsprechendes Verfahren zur Einstellung einer solchen Liege gelöst.

Die Erfindung umfasst die allgemeine technische Lehre, die Liege in der Schlafkabine nicht starr zu montieren, sondern mittels einer Lagerung mit einer Nivellierungseinrichtung, die es ermöglicht, die Liege beim Parken des Fahrzeugs auf einem geneigten Parkplatz zu nivellieren.

In einem bevorzugten Ausführungsbeispiel der Erfindung ermöglicht die Nivellierungseinrichtung eine Nivellierung der Liege um eine Fahrzeuglängsachse und um eine Fahrzeugquerachse. Auf diese Weise kann die Nivellierungseinrichtung sowohl eine Fahrzeuglängsneigung als auch eine Fahrzeugquerneigung ausgleichen und für eine exakt horizontal ausgerichtete Liege sorgen.

Erfindungsgemäß umfasst die Nivellierungseinrichtung ein Gelenk, mit dem die Liege schwenkbar in dem Fahrzeug angebracht ist, wobei das Gelenk eine Schwenkbewegung der Liege relativ zu dem Fahrzeug ermöglicht. Gemäß der Erfindung ist die Lagerung als Dreipunktlagerung ausgebildet, wobei ein Lagerungspunkt durch das bereits vorstehend erwähnte Gelenk gebildet wird, während die beiden anderen Lagerungspunkte durch zwei höhenverstellbare Stellglieder gebildet werden. Das Gelenk ist hierbei an einer Längskante der Liege im Wesentlichen in der Mitte der Längskante der Liege angeordnet und ermöglicht eine Drehbewegung der Liege um ihre Längsachse und um ihre Querachse. Beispielsweise kann dieses Gelenk also als Kugelgelenk ausgebildet sein. Die beiden Stellglieder sind dagegen an der gegenüberliegenden Längskante der Liege an den äußeren Enden der Längskante angeordnet, d.h. auf gegenüberliegenden Seiten der Querachse der Liege.

Wenn die beiden Stellglieder gemeinsam in der gleichen Richtung und in gleichem Ausmaß verstellt werden, so wird die Liege dann um ihre Längsachse geschwenkt. Wenn die beiden Stellglieder dagegen in unterschiedlicher Richtung oder in unterschiedlichem Ausmaß verstellt werden, so wird die Liege um ihre Querachse geschwenkt. Die beiden Stellglieder ermöglichen also eine Einstellung der Lage der Liege sowohl bezüglich ihrer Längsachse als auch bezüglich ihrer Querachse.

Ferner ist zu erwähnen, dass die Liege vorzugsweise quer zur Fahrzeuglängsachse ausgerichtet ist, wie es auch bei den herkömmlichen Schlafkabinen von Lastkraftwagen meist der Fall ist. Das bereits vorstehend erwähnte Gelenk ist dann vorzugsweise an der hinteren Längskante der Liege angeordnet, während sich die beiden Stellglieder vorzugsweise an der vorderen Längskante der Liege befinden. Diese Anordnung der Stellglieder an der vorderen Längskante der Liege ist auch vorteilhaft, weil die Stellglieder dann für eine manuelle Bedienung leicht zugänglich sind.

Es wurde bereits vorstehend erwähnt, dass die Stellglieder vorzugsweise manuell betätigt werden. Es ist jedoch im Rahmen der Erfindung auch möglich, dass die Stellglieder elektromotorisch oder in sonstiger Weise betätigt werden, wobei auch eine automatische Einstellung möglich ist. Beispielsweise kann die Fahrzeugquerneigung und die Fahrzeuglängsneigung durch Neigungssensoren erfasst werden, die dann die Stellglieder entsprechend so ansteuern, dass die Liege exakt horizontal ausgerichtet ist.

Die vorstehend bereits erwähnten Stellglieder können beispielsweise eine drehbare Kurvenscheibe aufweisen, insbesondere eine schneckenförmige Kurvenscheibe, die unter der Liege angeordnet ist und mit ihrer Kurvenfläche von unten auf die Liege wirkt und die Liege entsprechend der Drehstellung der Kurvenscheibe in eine bestimmte Schwenkstellung schwenkt. Die Kurvenfläche der Kurvenscheibe weist in Umfangsrichtung vorzugsweise einen zunehmenden Außenradius auf, so dass die Liege bei einem Drehen der Kurvenscheibe entsprechend angehoben bzw. abgesenkt wird. In dem bevorzugten Ausführungsbeispiel der Erfindung ist die Kurvenscheibe um eine Drehachse drehbar, die parallel zur Fahrzeugquerachse verläuft. Ferner ist zu erwähnen, dass die Kurvenscheibe in ihrer Kurvenfläche in Umfangsrichtung verteilt vorzugsweise zahlreiche Rastelemente (z.B. Ausnehmungen) aufweist, die mit einem entsprechend angepassten Rastelement (z.B. Lagerbolzen) an der Unterseite der Liege eine Rastverbindung bilden. Bei einem Drehen der Kurvenscheibe wird also in bestimmten Winkelstellungen eine Rastverbindung hergestellt. Dadurch wird ein unbeabsichtigtes Verdrehen der Kurvenscheibe bei Belastung verhindert.

Es wurde bereits vorstehend kurz erwähnt, dass die Lagerung der Liege vorzugsweise eine Dreipunktlagerung ist, wobei das Gelenk und zwei Stellglieder jeweils einen Lagerungspunkt bilden. Hierbei sind das Gelenk einerseits und die beiden Stellglieder andererseits vorzugsweise auf gegenüberliegenden Seiten der Liege angeordnet. Vorzugsweise ist das Gelenk hierbei an einer Längskante der Liege in der Mitte der Längskante angeordnet, während sich die beiden Stellglieder an der gegenüberliegenden Längskante der Liege an deren Enden befinden. Auf diese Weise könnend die Stellglieder in effektiver Weise die Schwenkstellung der Liege sowohl bezüglich ihrer Längsachse als auch bezüglich ihrer Querachse einstellen.

Darüber hinaus ist zu erwähnen, dass die Erfindung nicht nur Schutz beansprucht für die vorstehend beschriebene erfindungsgemäße Lagerung für eine Liege. Vielmehr beansprucht die Erfindung auch Schutz für ein Fahrzeug, das mit einer derartig gelagerten Liege ausgestattet ist. Bei dem Fahrzeug handelt es sich vorzugsweise um ein Nutzfahrzeug, wie beispielsweise einen Lastkraftwagen oder einen Omnibus, jedoch ist die erfindungsgemäße Lagerung für eine Liege auch bei anderen Typen von Fahrzeugen realisierbar.

In dem bevorzugten Ausführungsbeispiel der Erfindung ist die Lagerung mit der Liege in einer Schlafkabine eines Nutzfahrzeugs angeordnet, beispielsweise in einem Dachaufsatz eines Fahrerhauses oder in einer Schlafkabine hinter einem Fahrersitz.

Schließlich umfasst die Erfindung auch ein Verfahren zur Einstellung einer Liege in einem Fahrzeug, wobei das Verfahren vorsieht, dass die Liege beim Parken des Fahrzeugs auf einem geneigten Parkplatz nivelliert wird, insbesondere um die Fahrzeuglängsachse und/oder um die Fahrzeugquerachse.

Weitere Verfahrensmerkmale ergeben sich aus der vorstehenden Beschreibung, so dass diesbezüglich auf eine separate Beschreibung der Verfahrensmerkmale verzichtet werden kann.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine Seitenansicht eines Fahrerhauses eines Lastkraftwagens mit einer Schlafkabine und einer erfindungsgemäß gelagerten Liege,

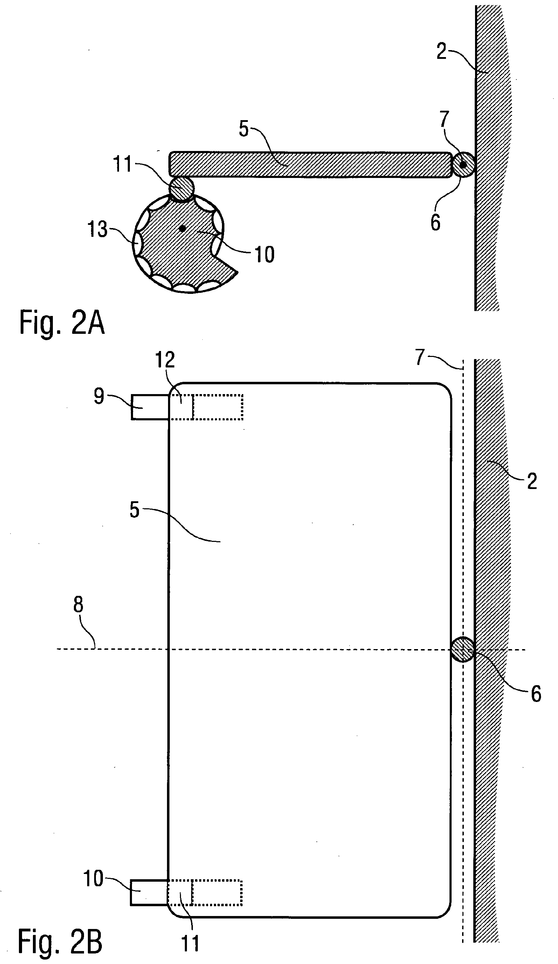

- Figur 2A: eine Seitenansicht der erfindungsgemäßen Lagerung für die Liege, sowie
- Figur 2B: eine Aufsicht auf die Lagerung der Liege aus Figur 2A.

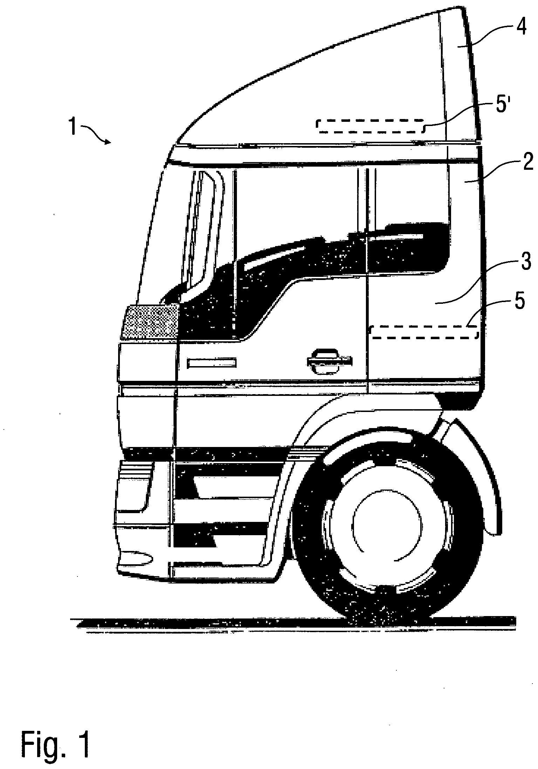

Figur 1 zeigt eine Seitenansicht eines Lastkraftwagens 1 im vorderen Bereich des Lastkraftwagens 1. Der Lastkraftwagen 1 kann an sich in herkömmlicher Weise ausgebildet sein, so dass auf eine ausführliche Beschreibung des Lastkraftwagens 1 verzichtet werden kann.

An dieser Stelle ist lediglich zu erwähnen, dass der Lastkraftwagen 1 ein Fahrerhaus 2 mit einer Schlafkabine 3 aufweist, wobei die Schlafkabine 3 wahlweise hinter dem Fahrersitz oder in einem Dachaufsatz 4 angeordnet sein kann. Entsprechend zeigt die Zeichnung in gestrichelten Linien zwei mögliche Positionen einer Liege 5, 5' in dem Fahrerhaus 2.

Die Liege 5 ist hierbei durch eine erfindungsgemäße Lagerung in dem Fahrerhaus 2 gelagert, wobei die Lagerung eine Nivellierungseinrichtung aufweist, um die Liege 5 in Fahrzeuglängsrichtung und in Fahrzeugquerrichtung nivellieren zu können, was vorteilhaft ist, wenn der Lastkraftwagen 1 auf einem geneigten Parkplatz abgestellt ist. Die Nivellierungseinrichtung ermöglicht dann trotz des geneigten Parkplatzes eine exakt horizontale Ausrichtung der Liege 5, was einen erholsamen Schlaf auf der Liege 5 ermöglicht.

Hierzu ist die Liege 5 mittels eines Drehgelenks 6 schwenkbar an dem Fahrerhaus 2 befestigt, wobei das Drehgelenk 6 eine Schwenkbewegung der Liege 5 sowohl um ihre Längsachse 7 als auch um ihre Querachse 8 ermöglicht.

Darüber hinaus umfasst die Nivellierungseinrichtung zwei drehbare Kurvenscheiben 9, 10, die beide unterhalb der Liege 5 angeordnet sind und von unten auf einen an der Unterseite der Liege 5 angebrachten Lagerbolzen 11 bzw. 12 wirken. Die Kurvenscheiben 9, 10 weisen in Umfangsrichtung jeweils einen zunehmenden Außenradius auf, so dass eine Verdrehung der Kurvenscheiben 9, 10 zu einem entsprechenden Anheben bzw. Absenken der Längskante der Liege 5 auf der dem Gelenk 6 gegenüber liegenden Seite führt.

Wenn die beiden Kurvenscheiben 9, 10 in der gleichen Richtung und um den gleichen Winkel gedreht werden, so wird die Liege 5 ausschließlich um ihre Längsachse 7 geschwenkt.

Wenn die beiden Kurvenscheiben 9, 10 dagegen in entgegengesetzter Richtung oder um unterschiedliche Winkel gedreht werden, so wird die Liege 5 um ihre Querachse 8 geschwenkt.
Durch eine geeignete Verdrehung der beiden Kurvenscheiben 9, 10 lässt sich die Liege 5 also sowohl bezüglich ihrer Längsachse 7 als auch bezüglich ihrer Querachse 8 nivellieren.

### Bezugszeichenliste:

- 1: Lastkraftwagen
- 2: Fahrerhaus
- 3: Schlafkabine
- 4: Dachaufsatz
- 5: Liege
- 5': Liege
- 6: Drehgelenk
- 7: Längsachse der Liege
- 8: Querachse der Liege
- 9: Kurvenscheibe
- 10: Kurvenscheibe
- 11: Lagerbolzen
- 12: Lagerbolzen
- 13: Ausnehmungen

## Patentansprüche

1. Lagerung für eine Liege (5) in einem Fahrzeug (1), insbesondere in einer Schlafkabine eines Lastkraftwagens, mit
a) einer Nivellierungseinrichtung zum Nivellieren der Liege (5) beim Parken des Fahrzeugs (1) auf einem geneigten Parkplatz,
b) einem Gelenk (6), mit dem die Liege (5) schwenkbar in dem Fahrzeug (1) angebracht ist, und
c) zwei Stellgliedern (9, 10) zum Einstellen einer bestimmten Schwenkstellung der Liege (5), wobei die beiden Stellglieder (9, 10) an der dem Gelenk (6) gegenüber liegenden Längskante der Liege (5) auf gegenüberliegenden Seiten einer Querachse (8) der Liege (5) angeordnet sind,
**dadurch gekennzeichnet**,
d) dass das Gelenk (6) an einer Längskante der Liege (5) im Wesentlichen in der Mitte der Längskante der Liege (5) angeordnet ist,
e) dass das Gelenk (6) ein Drehgelenk ist, das eine Drehbewegung der Liege (5) um eine Längsachse (7) der Liege (5) und eine Drehbewegung der Liege (5) um die Querachse (8) der Liege (5) ermöglicht, und
f) dass die beiden Stellglieder (9, 10) die Liege (5) um ihre Querachse (8) und um ihre Längsachse (7) schwenken.

2. Lagerung nach Anspruch 1, **dadurch gekennzeichnet, dass** die Nivellierungseinrichtung die Liege (5) um eine Fahrzeuglängsachse und/oder um eine Fahrzeugquerachse nivelliert.

3. Lagerung nach einem der vorhergehenden Ansprüche,
**dadurch gekennzeichnet,**
a) **dass** die Liege (5) quer zur Fahrzeuglängsachse ausgerichtet ist,
b) **dass** das Gelenk (6) an der hinteren Längskante der Liege (5) angeordnet ist, und
c) **dass** die beiden Stellglieder (9, 10) an der vorderen Längskante der Liege (5) angeordnet sind.

4. Lagerung nach einem der vorhergehenden Ansprüche,
**dadurch gekennzeichnet,**
a) **dass** das mindestens eine Stellglied (9, 10) eine drehbare Kurvenscheibe (9, 10) aufweist, insbesondere eine schneckenförmige Kurvenscheibe, die unter der Liege (5) angeordnet ist und mit ihrer Kurvenfläche von unten auf die Liege (5) wirkt und die Liege (5) entsprechend der Drehstellung der Kurvenscheibe in eine bestimmte Schwenkstellung schwenkt, und/oder
b) **dass** die Kurvenscheibe (9, 10) um eine Drehachse drehbar ist, die parallel zur Fahrzeugquerachse verläuft, und/oder
c) **dass** die Kurvenscheibe (9, 10) in ihrer Kurvenfläche in Umfangsrichtung verteilt zahlreiche Rastelemente (13) aufweist, die mit einem entsprechend angepassten Rastelement (11) an der Unterseite der Liege (5) eine Rastverbindung bilden, und/oder
d) **dass** die Rastelemente (13) Ausnehmungen in der Kurvenfläche der Kurvenscheibe (9, 10) sind.

5. Lagerung nach einem der vorhergehenden Ansprüche,
**dadurch gekennzeichnet,**
a) **dass** die Lagerung der Liege (5) eine Dreipunktlagerung ist, und/oder
b) **dass** das mindestens eine Gelenk (6) einerseits und das mindestens eine Stellglied (9, 10) andererseits auf gegenüber liegenden Seiten der Liege (5) angeordnet sind.

6. Nutzfahrzeug (1), insbesondere Lastkraftwagen, mit der Lagerung nach einem der vorhergehenden Ansprüche und mit einer Liege (5).

7. Nutzfahrzeug (1) nach Anspruch 6, **dadurch gekennzeichnet,**
a) **dass** das Nutzfahrzeug (1) ein Fahrerhaus (2) mit einer Schlafkabine (3) aufweist, wobei die Lagerung mit der Liege (5) in der Schlafkabine (3) angeordnet ist, und/oder
b) **dass** sich die Schlafkabine (3) in dem Fahrerhaus (2) hinter einem Fahrersitz befindet, oder
c) **dass** sich die Schlafkabine (3) in dem Fahrerhaus (2) in einem Dachaufsatz (4) befindet.

8. Verfahren zur Einstellung einer Liege (5) in einem Fahrzeug (1), insbesondere in einer Schlafkabine (3) eines Lastkraftwagens, **dadurch gekennzeichnet, dass** die Liege (5) beim Parken des Fahrzeugs (1) auf einem geneigten Parkplatz mittels einer Lagerung nach einem der Ansprüche 1 bis 5 nivelliert wird, insbesondere um die Fahrzeuglängsachse und/oder um die Fahrzeugquerachse.

## Claims

1. Mounting arrangement for a bunk (5) in a vehicle (1), in particular in a sleeping compartment of a lorry, having
a) a levelling device for levelling the bunk (5) when the vehicle (1) is parked in an inclined parking space,
b) a joint (6) with which the bunk (5) is fitted pivotably in the vehicle (1), and
c) two actuators (9, 10) for setting a certain pivoting position of the bunk (5), wherein the two actuators (9, 10) are arranged on the longitudinal edge of the bunk (5), which longitudinal edge is opposite the joint (6), on opposite sides of a transverse axis (8) of the bunk (5),
characterized
d) in that the joint (6) is arranged on a longitudinal edge of the bunk (5) substantially in the centre of the longitudinal edge of the bunk (5),
e) in that the joint (6) is a rotary joint which permits a rotational movement of the bunk (5) about a longitudinal axis (7) of the bunk (5) and a rotational movement of the bunk (5) about the transverse axis (8) of the bunk (5), and
f) in that the two actuators (9, 10) pivot the bunk (5) about the transverse axis (8) thereof and about the longitudinal axis (7) thereof.

2. Mounting arrangement according to Claim 1, **characterized in that** the levelling device levels the bunk (5) about a longitudinal axis of the vehicle and/or about a transverse axis of the vehicle.

3. Mounting arrangement according to either of the preceding claims, **characterized**
a) **in that** the bunk (5) is oriented transversely with respect to the longitudinal axis of the vehicle,
b) **in that** the joint (6) is arranged on the rear longitudinal edge of the bunk (5), and
c) **in that** the two actuators (9, 10) are arranged on the front longitudinal edge of the bunk (5).

4. Mounting arrangement according to one of the preceding claims, **characterized**
a) **in that** the at least one actuator (9,10) has a rotatable cam disc (9, 10), in particular a snail-shaped cam disc, which is arranged below the bunk (5) and the cam surface of which acts on the bunk (5) from below and pivots the bunk (5) into a certain pivoting position corresponding to the rotational position of the cam disc, and/or
b) **in that** the cam disc (9, 10) is rotatable about an axis of rotation which runs parallel to the transverse axis of the vehicle, and/or
c) **in that** the cam surface of the cam disc (9, 10) has, distributed in the circumferential direction, numerous latching elements (13) which form a latching connection with a correspondingly matched latching element (11) on the lower side of the bunk (5), and/or
d) **in that** the latching elements (13) are recesses in the cam surface of the cam disc (9, 10).

5. Mounting arrangement according to one of the preceding claims, **characterized**
a) **in that** the mounting arrangement of the bunk (5) is a three-point mounting arrangement, and/or
b) **in that** the at least one joint (6), on the one hand, and the at least one actuator (9, 10), on the other hand, are arranged on opposite sides of the bunk (5).

6. Commercial vehicle (1), in particular lorry, with the mounting arrangement according to one of the preceding claims and with a bunk (5).

7. Commercial vehicle (1) according to Claim 6, **characterized**
a) **in that** the commercial vehicle (1) has a driver's cab (2) with a sleeping compartment (3), wherein the mounting arrangement is arranged with the bunk (5) in the sleeping compartment (3), and/or
b) **in that** the sleeping compartment (3) is located in the driver's cab (2) behind a driver's seat, or
c) **in that** the sleeping compartment (3) is located in the driver's cab (2) in a roof extension (4).

8. Method for adjusting a bunk (5) in a vehicle (1), in particular in a sleeping compartment (3) of a lorry, **characterized in that** the bunk (5) is levelled by means of a mounting arrangement according to one of Claims 1 to 5, in particular about the longitudinal axis of the vehicle and/or about the transverse axis of the vehicle, when the vehicle (1) is parked in an inclined parking space.

## Revendications

1. Montage pour couchette (5) dans un véhicule (1), en particulier dans la cabine à couchette d'un camion, le montage présentant
a) un dispositif de mise à niveau qui permet de mettre à niveau la couchette (5) lors du stationnement du véhicule (1) sur un emplacement de stationnement approprié,
b) une articulation (6) par laquelle la couchette (5) est placée à pivotement dans le véhicule (1) et
c) deux organes d'ajustement (9, 10) qui ajustent une position d'inclinaison définie de la couchette (5), les deux organes d'ajustement (9, 10) étant disposés sur les bords longitudinaux de la couchette (5), situés face à l'articulation (6), sur des côtés opposés d'un axe transversal (8) de la couchette (5),
**caractérisé en ce que**
d) l'articulation (6) est disposée sur un bord longitudinal de la couchette (5) essentiellement au milieu du bord longitudinal de la couchette (5),
e) **en ce que** l'articulation (6) est une articulation rotative qui permet un déplacement de rotation de la couchette (5) autour d'un axe longitudinal (7) de la couchette (5) et un déplacement de rotation de la couchette (5) autour de l'axe transversal (8) de la couchette (5) et
f) **en ce que** les deux organes d'ajustement (9, 10) font pivoter la couchette (5) autour de son axe transversal (8) et autour de son axe longitudinal (7).

2. Montage selon la revendication 1, **caractérisé en ce que** le dispositif de mise à niveau met la couchette (5) à niveau autour d'un axe longitudinal du véhicule et/ou autour d'un axe transversal du véhicule.

3. Montage selon l'une des revendications précédentes, **caractérisé en ce que**
a) la couchette (5) est alignée transversalement par rapport à l'axe longitudinal du véhicule,
b) l'articulation (6) est disposée sur le côté longitudinal arrière de la couchette (5) et
c) **en ce que** les deux organes d'ajustement (9, 10) sont disposés sur le côté longitudinal avant de la couchette (5).

4. Montage selon l'une des revendications précédentes, **caractérisé en ce que**
a) le ou les organes d'ajustement (9, 10) présentent une came rotative (9, 10), en particulier une came en forme de vis disposée en dessous de la couchette (5) et dont la surface agit par le bas sur la couchette (5) pour incliner la couchette (5) dans une position d'inclinaison définie qui correspond à la position en rotation de la came, et/ou
b) **en ce que** la came (9, 10) peut tourner autour d'un axe de rotation qui s'étend parallèlement à l'axe transversal du véhicule, et/ou
c) **en ce que** la came (9, 10) présente dans sa surface de came plusieurs éléments d'encliquetage (13) répartis à sa périphérie et qui forment une liaison encliquetée avec un élément d'encliquetage (11) adapté de manière correspondante sur le côté inférieur de la couchette (5) et/ou
d) **en ce que** les éléments d'encliquetage (13) sont des découpes formées dans la surface de la came (9, 10).

5. Montage selon l'une des revendications précédentes, **caractérisé en ce que**
a) le montage de la couchette (5) est un montage en trois point et/ou
b) **en ce que** la ou les articulations (6), d'une part, et le ou les organes d'ajustement (9, 10), d'autre part, sont situés sur des côtés opposés de la couchette (5) .

6. Véhicule utilitaire (1) et en particulier camion, doté d'un montage selon l'une des revendications précédentes et d'une couchette (5).

7. Véhicule utilitaire (1) selon la revendication 6, **caractérisé en ce que**
a) le véhicule (1) présente une cabine (2) de conducteur dotée d'une cabine-couchette (3), le montage et la couchette (5) étant disposés dans la cabine-couchette (3) et/ou
b) **en ce que** la cabine-couchette (3) est située derrière le siège du conducteur dans la cabine (2) du conducteur ou
c) **en ce que** la cabine-couchette (3) est située dans un appendice de toit (4) de la cabine (2) du conducteur.

8. Procédé de réglage d'une couchette (5) dans un véhicule (1), en particulier dans une cabine-couchette (3) d'un camion, **caractérisé en ce que** la couchette (5) est mise à niveau au moyen d'un montage selon l'une des revendications 1 à 5 lorsque le véhicule (1) est stationné sur un emplacement de stationnement approprié, en particulier autour de l'axe longitudinal du véhicule et/ou autour de l'axe transversal du véhicule.
